# EUROPÄISCHE PATENTSCHRIFT

(11) **EP 3 143 868 B1**
(45) Veröffentlichungstag und Bekanntmachung des Hinweises auf die Patenterteilung: **15.08.2018**
(21) Anmeldenummer: 16176775.1
(22) Anmeldetag: 29.06.2016
(51) Int. Cl.: A01F 15/07

(54) **RUNDBALLENPRESSE**
ROUND BALING PRESS
PRESSE À BALLES RONDES

(30) Priorität: 17.09.2015 DE 102015115709
(43) Veröffentlichungstag der Anmeldung: 22.03.2017
(73) Patentinhaber: Usines Claas France S.A.S, 57140 St. Rémy / Woippy (FR)
(72) Erfinder: Hasse, Lionel, 57420 Solgne (FR); Baros, Geoffroy, 90130 Montreux Chateau (FR)
(74) Vertreter: Budach, Steffen

(56) Entgegenhaltungen:
- EP-A1- 2 050 330
- DE-A1-102013 110 626
- US-A1- 2012 090 273

## Beschreibung

Die Erfindung betrifft eine Rundballenpresse mit einer Wickelvorrichtung zum Umhüllen von Rundballen gemäß dem Oberbegriff des Anspruches 1.

Rundballenpressen werden in der Landwirtschaft eingesetzt, um beispielsweise im Schwad abgelegtes halmartiges Erntegut wie Stroh, Heu, Gras oder dergleichen aufzunehmen und zu runden, im Wesentlichen zylinderförmigen Ballen, sogenannten Rundballen, zu pressen. Das Erntegut wird dabei in einer Presskammer der Rundballenpresse zu einem Rundballen verdichtet, wobei die Presskammer umfangsseitig durch einen oder mehrere umlaufenden Riemen und/oder rotierende Stahlrollen begrenzt sein kann. Die gepressten Rundballen werden üblicherweise nach Erreichen einer vorbestimmten Größe mit Schnüren und/oder einem Netz gebunden und durch eine hintere Klappenöffnung der Presskammer ausgeworfen und an eine der Presskammer nachgeordnete Wickelvorrichtung übergeben. Das Umwickeln eines Rundballens erfolgt besonders bei einer Verarbeitung von Gras und/oder Klee, da das Erntegut in dem Rundballen durch das Wickelmaterial, üblicherweise eine Folie, weitestgehend unter Ausschluss von Luft gelagert werden kann, wodurch eine anschließende Gärung zu Silage ermöglicht werden kann. Der Rundballen wird nach dem Pressen und/oder Umwickeln durch die Wickelvorrichtung auf dem Feld abgelegt.

Eine derartige Rundballenpresse ist beispielsweise aus der EP 2 050 330 A1 bekannt, wobei die offenbarte Rundballenpresse heckseitig einen Ballenwickler aufweist, welcher im Wesentlichen einen Wickeltisch zur Aufnahme eines gepressten Rundballens sowie einen um eine vertikale Achse drehbaren Wickelarm umfasst. Der zweigliedrige Wickelarm ist jeweils endseitig mit einem Folienhalter ausgestattet, so dass sich ein auf dem Wickeltisch liegender Rundballen bei Rotation des Wickelarms mit Folie umhüllen lässt. Indem der Rundballen während des Umhüllens auf dem Wickeltisch zusätzlich um eine horizontale Drehachse in Drehung versetzt wird, ist der Rundballen nach Abschluss des Wickelvorgangs allseitig mit Folie umhüllt. Eine Rundballenpresse mit einer in eine Transportstellung verschwenkbaren Wickelvorrichtung ist beispielsweise aus der US 2012 090273 A1 bekannt.

Derartige Rundballenpressen mit einer Wickelvorrichtung benötigen aufgrund der Anordnung der Wickelvorrichtung hinter der Presskammer und des Platzbedarfs der Wickelvorrichtung beim Wickeln einen großen Bauraum. Dies kann eine Konstruktion einer Presse aufwändiger machen, da der verfügbare Bauraum beispielsweise durch Vorgaben einer Straßenverkehrsordnung beschränkt sein kann. Ebenso kann die Handhabung einer derartigen Rundballenpresse im Straßenverkehr oder beim Rangieren aufgrund der Baugröße der Rundballenpressen erschwert werden. Bei Fahrten im Gelände, beispielsweise zu oder von einem Feld, kann es aufgrund der langen Abmessungen der Rundballenpresse zu einer Beschädigung der Rundballenpresse durch Bodenkontakt kommen.

Es ist daher die Aufgabe der vorliegenden Erfindung, eine Rundballenpresse bereitzustellen, welche eine verbesserte Handhabbarkeit und einen verbesserten Schutz vor Beschädigungen aufweist.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine Rundballenpresse für landwirtschaftliche Halmgüter mit einer eine Presskammer umfassenden Pressvorrichtung zum Pressen von Rundballen, und einer der Pressvorrichtung nachgelagerten Wickelvorrichtung zum Umwickeln eines Rundballens mit einem Wickelmaterial, und einem Fahrwerk mit wenigstens einer Radachse, wobei erfindungsgemäß die Wickelvorrichtung mittels eines Aktors von einer Arbeitsposition in eine Transportposition verbringbar ist.

Eine derartige Rundballenpresse wird üblicherweise pressvorrichtungsseitig mit einer landwirtschaftlichen Arbeitsmaschine gekoppelt und durch diese gezogen. Zudem wird durch die Arbeitsmaschine die zum Betrieb der Pressvorrichtung und/oder der Wickelvorrichtung benötigte Energie bereitgestellt. Die Pressvorrichtung weist zum Formen und Verdichten eines Rundballens einer Presskammer auf, wobei die Presskammer in Form einer sogenannten Festkammerpresse oder einer Presskammer mit einem variablen Pressraum ausgebildet sein kann. Eine Festkammerpresse weist dabei entlang eines definierten Radius umfangsseitig Pressrollen auf, während eine Pressvorrichtung mit variabler Presskammer üblicherweise ein oder mehrere endlos umlaufende Riemen aufweist, durch welche die Presskammer begrenzt wird. Ein Fahrwerk der Rundballenpresse kann wenigstens eine Radachse aufweisen, wobei das Fahrwerk pressvorrichtungsseitig an der Rundballenpresse angeordnet sein kann. Die Wickelvorrichtung kann derart an der Pressvorrichtung angeordnet sein, dass die Wickelvorrichtung mittels eines Aktors, welcher zwischen der Wickelvorrichtung und der Pressvorrichtung angeordnet sein kann, verlagerbar ist. Erfindungsgemäß ist die Wickelvorrichtung durch den Aktor von einer Arbeitsposition, in welcher ein Rundballen mit einem Wickelmaterial umwickelt werden kann, in eine Transportposition verbringbar, wobei in der Transportposition die Wickelvorrichtung im Wesentlichen näher an die Pressvorrichtung heran verlagert wird, wodurch eine Gesamtlänge der Rundballenpresse verkürzt werden kann. Durch die Verkürzung der Rundballenpresse in der Transportposition der Wickelvorrichtung kann die Manövrierbarkeit der Rundballenpresse und/oder die Handhabbarkeit der Rundballenpresse insbesondere im Straßenverkehr verbessert werden. Zudem kann durch eine verkürzte Gesamtlänge eine Vergrößerung der Bodenfreiheit der Wickelvorrichtung ermöglicht werden, wodurch eine Beschädigung der Rundballenpresse bei einer Fahrt im Gelände vermieden werden kann.

In einer bevorzugten Ausgestaltung der Erfindung weist die Wickelvorrichtung einen Tragrahmen zur Aufnahme eines Wickelarmes und eines Wickeltisches auf, wobei der Tragrahmen pressvorrichtungsseitig um eine Schwenkachse verschwenkbar gelagert ist. Ein Wickelarmrahmen zur drehbaren Aufnahme eines Wickelarmes zum Umwickeln eines Rundballens und ein Wickeltisch können jeweils verschwenkbar an dem Tragrahmen der Wickelvorrichtung angeordnet sein. Die gesamte Wickelvorrichtung kann, insbesondere in eine vertikale Richtung, verschwenkbar an der Pressvorrichtung angeordnet sein. Ein Verschwenken der Wickelvorrichtung kann dabei um eine Schwenkachse erfolgen, welche im Wesentlichen horizontal und rechtwinkelig zu einer Längsachse der Rundballenpresse angeordnet sein kann. Die Schwenkachse kann dabei heckseitig der Pressvorrichtung oder in einer Radachse der Rundballenpresse angeordnet sein. Durch ein Verschwenken der Wickelvorrichtung um die Schwenkachse in eine vertikale Richtung, weg von dem Boden, kann die Gesamtlänge der Rundballenvorrichtung verringert werden. Gleichzeitig kann durch ein derartiges Verschwenken die Bodenfreiheit der heckseitig an der Rundballenpresse angeordneten Wickelvorrichtung vergrößert werden, wodurch Beschädigungen bei einer Geländefahrt der Rundballenpresse vermieden werden können.

Besonders bevorzugt ist der mindestens eine Aktor wickelvorrichtungsseitig an dem Wickelarmrahmen, insbesondere unmittelbar, festgelegt. Ein wickelvorrichtungsseitiger, insbesondere unmittelbar, also direkt, an einem Wickelarmrahmen festgelegter Aktor bietet den Vorteil eines größeren Hebelmomentes um die Schwenkachse zum Verschwenken der Wickelvorrichtung, wodurch auch schwächer dimensionierte Aktoren einsetzbar sind.

In einer bevorzugten Ausgestaltung der Erfindung weist der Wickelarmrahmen eine größere Breite auf als die Presskammer der Pressvorrichtung. Ein Wickelarmrahmen einer Wickelvorrichtung ist üblicherweise benachbart zu der Pressvorrichtung und insbesondere benachbart zu der Presskammer angeordnet, und weist an einem freien, dem Boden abgewandten Ende, eine Abwinkelung von der Pressvorrichtung weg auf, wobei an dem freien Ende der Abwinkelung ein Wickelarm drehbar angeordnet ist. Durch die Abwinkelung ist der Wickelarmrahmen außerhalb des Arbeitsdurchmessers des Wickelarmes an der Rundballenpresse festlegbar. Der Wickelarmrahmen kann dabei an beiden Seiten der Rundballenpresse, insbesondere an einem Tragrahmen der Wickelvorrichtung, festgelegt sein. Unter der Breite des Wickelarmrahmens ist im Sinne der Erfindung die lichte innere Breite zu verstehen und unter der Breite der Presskammer eine maximale äußere Breite der Presskammer einschließlich eines diese umgebenden Gehäuses. Die Anordnung des Wickelarmrahmens benachbart zur Pressvorrichtung hat den Vorteil, dass der Einsatz eines kurzen Aktors ermöglicht werden kann. Zudem ist dadurch ein Verschwenken der Wickelvorrichtung derart möglich, dass beispielsweise der Wickelarmrahmen mit der Presskammer überlappend angeordnet ist. Dies hat den Vorteil, dass aufgrund einer möglichen Überlappung des Wickelarmrahmens mit der Presskammer ein Schwenkbereich der Wickelvorrichtung weiter vergrößert werden kann.
Ferner ist bevorzugt vorgesehen, dass der Tragrahmen der Wickelvorrichtung zweiteilig ausgebildet ist und eine Klappachse aufweist. Ein zweiteilig ausgebildeter Tragrahmen der Wickelvorrichtung kann einen ersten, benachbart zur Pressvorrichtung angeordneten Bereich, und einen zweiten, von der Pressvorrichtung abgewandten, Bereich, aufweisen. Der erste Bereich kann dabei verschwenkbar an der Pressvorrichtung und der zweite Bereich verschwenkbar an dem ersten Bereich angeordnet sein. An dem ersten Bereich kann der Wickelarmrahmen angeordnet sein und an dem zweiten Bereich der Wickeltisch zur Aufnahme eines Rundballens. Die beiden Bereiche können dabei über eine Klappachse verbunden sein, wobei der erste und der zweite Bereich über einen zweiten Aktor verschwenkbar verbunden sein können. Der erste Bereich des Tragrahmens, welcher benachbart zu der Pressvorrichtung angeordnet ist, kann mittels des Aktors verschwenkbar gelagert sein. Die zweiteilige Ausgestaltung des Tragrahmens der Wickelvorrichtung ermöglicht ein weiteres Verschwenken der Wickelvorrichtung und ein weiteres Verkürzen der Gesamtlänge der Rundballenpresse und eine weitere Erhöhung der Bodenfreiheit.

Vorteilhafterweise ist vor einer Verlagerung der Wickelvorrichtung in die Transportposition der Wickelarm in eine definierte Transportstellung verbringbar. Der Wickelarm kann in eine definierte Transportstellung verbracht werden, in der ein insbesondere zweigliedrig, U-förmig ausgestalteter Wickelarm, im Wesentlichen rechtwinkelig zu einer Längsachse der Rundballenpresse angeordnet ist. Dadurch, dass der Wickelarm im Wesentlichen quer zur Längsachse der Rundballenpresse angeordnet ist, weist der Wickelarm, bezogen auf die Längsrichtung der Rundballenpresse, seine kürzeste Erstreckung auf. Dies hat den Vorteil, dass die Wickelvorrichtung weiter verschwenkt werden kann, ohne die Gefahr einer Kollision des Wickelarmes mit der Pressvorrichtung bei einem Verschwenken.

In einer bevorzugten Ausgestaltung der Erfindung ist der Wickeltisch vor oder während einer Verlagerung der Wickelvorrichtung in die Transportposition in eine Transportstellung verbringbar. Ein Wickeltisch der Rundballenpresse, insbesondere einer Wickelvorrichtung, kann heckseitig der Rundballenpresse über den Tragrahmen der Wickelvorrichtung hinausragen, so dass durch ein Verschwenken, insbesondere in vertikaler Richtung, des Wickeltisches die Gesamtlänge der Wickelvorrichtung und der Rundballenpresse verkürzt werden kann. Dies kann vorteilhafter Weise vor oder zeitgleich während eines Verschwenkens der Wickelvorrichtung erfolgen.

In einer besonders bevorzugten Ausgestaltung der Erfindung ist die Wickelvorrichtung mittels des Aktors, insbesondere zusätzlich, aus der Arbeitsposition in eine Ablageposition zur Ablage eines Rundballens verlagerbar. Durch den Aktor kann die Wickelvorrichtung, insbesondere nach Beendigen eines Umwickelns eines Rundballens der auf dem Wickeltisch angeordnet ist, aus der Arbeitsposition in eine Ablageposition verlagert werden. Bei einer Verlagerung in die Ablageposition kann die Wickelvorrichtung im Wesentlichen von der Pressvorrichtung weg verlagert werden, beispielsweise durch eine Rotation um die Schwenkachse in Richtung des Bodens. Hierdurch kann ein Abstand des fertig gewickelten Rundballens zum Boden bei einem Absetzen verringert werden, so dass bei einem Absetzen des Rundballens ein Wegrollen des Rundballens vermieden werden kann. Dies ist insbesondere bei hügeligem Gelände von Vorteil.

In einer besonders bevorzugten Ausgestaltung der Erfindung ist zur Steuerung des Wickelarms, des Wickeltisches und/oder einer Verlagerung der Wickelvorrichtung, insbesondere in eine Transportposition, eine Arbeitsposition und/oder eine Ablageposition, eine Steuerungseinrichtung vorgesehen. Eine Steuereinrichtung zur Steuerung und/oder Regelung des Wickelarms, des Wickeltisches und/oder einer Verlagerung der Wickelvorrichtung kann, insbesondere fernbedienbar, an der Rundballenpresse angeordnet sein. Die Steuerungseinrichtung kann drahtgebunden und/oder drahtlos mit einer arbeitsmaschinenseitig angeordneten Steuer- und Regeleinrichtung verbindbar sein. Die hat den Vorteil, dass eine Verlagerung der Wickelvorrichtung in eine Arbeitsposition, eine Transportposition und/oder eine Ablageposition komfortabel durch den Bediener von der Arbeitsmaschine aus steuerbar ist.

In einer besonders bevorzugten Ausgestaltung der Erfindung ist ein Aktor zur Verlagerung der Wickelvorrichtung ein Hydraulikzylinder. Die Ausgestaltung des Aktors in Form eines Hydraulikzylinders bietet den Vorteil, dass dieser mit der Hydraulik einer Arbeitsmaschine, welcher die Rundballenpresse bewegt und mit Energie versorgt, verbunden werden kann. Dies ermöglicht einen leistungsfähigen Aktor mit geringem Aufwand nutzbar zu machen.

Nachfolgend wird die Erfindung unter Bezugnahme auf die anliegenden Zeichnungen näher erläutert.

Es zeigt:
- Fig. 1:: eine schematische Seitenansicht einer Rundballenpresse in einer Arbeitsposition; und
- Fig. 2:: eine schematische Seitenansicht der in Figur 1 gezeigten Rundballenpresse in einer Transportposition.

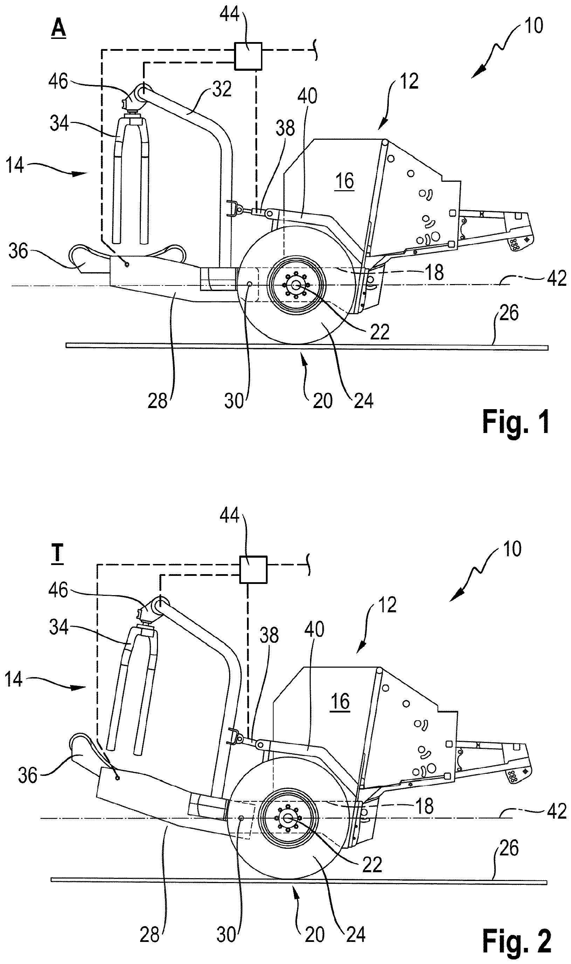

In Figur 1 ist eine Rundballenpresse 10 in einer Arbeitsposition A dargestellt. Die Rundballenpresse 10 weist eine Pressvorrichtung 12 auf, und eine dieser nachgeordnet angeordneten Wickelvorrichtung 14. Pressvorrichtungsseitig kann die Rundballenpresse 10 mit einer landwirtschaftlichen Arbeitsmaschine (nicht dargestellt), wie einem Traktor, zum Fortbewegen und Versorgen mit Antriebsenergie verbunden sein. Die Pressvorrichtung 12 weist zum Formen von Rundballen eine Presskammer 16 auf, welche auf einem Rahmen 18 angeordnet ist. An dem Rahmen 18 ist ein einachsiges Fahrwerk 20 angeordnet, welches eine Radachse 22 mit daran angeordneten Räder 24 aufweist, über welche die Rundballenpresse 10 gegenüber dem Boden 26 abgestützt ist. Der Pressvorrichtung 12 nachgeordnet ist die Wickelvorrichtung 14 heckseitig der Rundballenpresse 10 angeordnet. Die Wickelvorrichtung 14 weist einen Tragrahmen 28 auf, welcher in einer Schwenkachse 30 verschwenkbar an dem Rahmen 18 der Pressvorrichtung 12 angeordnet ist. Die Schwenkachse 30 der Wickelvorrichtung 14 ist dabei heckseitig der Radachse 22 und beabstandet zu dieser angeordnet. An dem Tragrahmen 28 der Wickelvorrichtung 14 ist ein Wickelrahmen 32 angeordnet, welcher der drehbaren Aufnahme eines Wickelarmes 34 dient. Der Wickelarmrahmen 32 ist dabei beidseitig der Presskammer 16 auf dem Tragrahmen 28 angeordnet und ermöglicht ein aufklappen der Presskammer 16 sowie das Hindurchtransportieren eines fertig gepressten Rundballens (nicht dargestellt) zu einem Wickeltisch 34, welcher ebenfalls an dem Tragrahmen 28 schwenkbar aufnehmbar ist. Ein auf dem Wickeltisch 34 angeordneter Rundballen kann durch den Wickelarm 34, welcher U-förmig zweigliedrig ausgebildet ist, umkreist werden, wodurch ein an dem Wickelarm 34 angeordnetes Wickelmaterial (nicht dargestellt) um den Rundballen gewickelt werden kann. Der Rundballen kann dabei durch den Wickeltisch 36 ebenfalls in Rotation versetzt werden, wodurch eine vollständige Umwickelung des Rundballens mit dem Wickelmaterial gewährleistet werden kann.

Erfindungsgemäß ist an dem Wickelarmrahmen 32 ein Aktor 38 in Form eines Hydraulikzylinders angeordnet, welcher pressvorrichtungsseitig an einem Aufnahmerahmen 40 gelagert ist. Durch eine Verkürzung der Länge des Aktors 38 ist die in der Arbeitsposition dargestellte Wickelvorrichtung 14 um die Schwenkachse 30 herum durch eine Rotation zur Pressvorrichtung 12 hin verlagerbar. Hierdurch kann eine Gesamtlänge der Rundballenpresse 10 verkürzt werden und eine Bodenfreiheit der Wickelvorrichtung 14 deutlich vergrößert werden, wodurch, insbesondere wickelvorrichtungsseitig, Beschädigungen der Rundballenpresse 10 vermieden werden können.

In Figur 2 ist die Rundballenpresse 10 in einer Transportposition T dargestellt. Hierbei ist die Wickelvorrichtung 14 um die Schwenkachse 30 herum in vertikaler Richtung von dem Boden 26 weg verschwenkt. Die Wickelvorrichtung 14 ist dabei nicht mehr in einer Position zum Umwickeln eines Rundballens und der Wickelarm 34 ist in einer definierten Transportstellung angeordnet, welche im Wesentlichen rechtwinkelig zu einer Längsachse 42 der Rundballenpresse 10 angeordnet ist. Der Wickeltisch 36 ist ebenfalls in eine Transportstellung verschwenkt, wobei ein heckseitiges Ende des Wickeltisches 36 in vertikaler Richtung verlagert ist, wodurch die, insbesondere wickelvorrichtungsseitige, Bodenfreiheit der Rundballenpresse 10 weiter erhöht werden kann. Zur Verlagerung der Wickelvorrichtung 14 ist eine Steuerungseinrichtung 44 vorgesehen, welche an der Rundballenpresse 10 oder arbeitsmaschinenseitig angeordnet sein kann. Zudem ist denkbar, dass die Steuerungseinrichtung 44 mit einer entsprechenden arbeitsmaschinenseitig angeordneten Steuer- und Regelvorrichtung Verbindbar ist, wodurch die Rundballenpresse 10 von der Arbeitsmaschine aus fernbedienbar sein kann. Die Steuerungseinrichtung 44 ist dabei mit dem mindestens einen Aktor 38 verbunden. Durch eine Verbindung der Steuerungseinrichtung 44 mit einem Wickelarmantrieb 46, welcher endseitig an dem Wickelarmrahmen 32 angeordnet sein kann, wird ein Verschwenken des Wickelarmes 34 in die Transportstellung ermöglicht. Ebenso kann ein (nicht dargestellter) Antrieb des Wickeltisches 36, durch welchen dieser verschwenkbar ist, mit der Steuerungseinrichtung 44 verbindbar sein.

### Bezugszeichenliste

- 10: Rundballenpresse
- 12: Pressvorrichtung
- 14: Wickelvorrichtung
- 16: Presskammer
- 18: Rahmen
- 20: Fahrwerk
- 22: Radachse
- 24: Rad
- 26: Boden
- 28: Tragrahmen
- 30: Schwenkachse
- 32: Wickelarmrahmen
- 34: Wickelarm
- 36: Wickeltisch
- 38: Aktor
- 40: Aufnahmerahmen
- 42: Längsachse
- 44: Steuerungseinrichtung
- 46: Wickelarmantrieb

- A: Arbeitsposition
- T: Transportposition

## Patentansprüche

1. Rundballenpresse für landwirtschaftliche Halmgüter mit einer eine Presskammer (16) umfassenden Pressvorrichtung (12) zum Pressen von Rundballen, und einer der Pressvorrichtung (12) nachgelagerten Wickelvorrichtung (14) zum Umwickeln eines Rundballens mit einem Wickelmaterial, und einem Fahrwerk (20) mit wenigstens einer Radachse (22), **dadurch gekennzeichnet, dass** die Wickelvorrichtung (14) mittels eines Aktors (38) von einer Arbeitsposition (A) in eine Transportposition (T) verbringbar ist, wobei die Wickelvorrichtung (14) einen Tragrahmen (28) zur Aufnahme eines Wickelarmrahmens (32) und eines Wickeltisches (36) aufweist, wobei der Tragrahmen (28) pressvorrichtungsseitig um eine Schwenkachse (30) verschwenkbar gelagert ist.

2. Rundballenpresse nach Anspruch 1, **dadurch gekennzeichnet, dass** der mindestens eine Aktor (38) wickelvorrichtungsseitig an dem Wickelarmrahmen (32) festgelegt ist.

3. Rundballenpresse nach Anspruch 1 oder 2, **dadurch gekennzeichnet, dass** der Wickelarmrahmen (32) eine größere Breite aufweist als die Presskammer (16) der Pressvorrichtung (12).

4. Rundballenpresse nach einem der vorherigen Ansprüche, **dadurch gekennzeichnet, dass** der Tragrahmen (28) der Wickelvorrichtung (14) zweiteilig ausgebildet ist und eine Klappachse aufweist.

5. Rundballenpresse nach einem der vorherigen Ansprüche, **dadurch gekennzeichnet, dass** vor einer Verlagerung der Wickelvorrichtung (14) in die Transportposition (T) der Wickelarm (34) in eine definierte Transportstellung verbringbar ist.

6. Rundballenpresse nach einem der vorherigen Ansprüche, **dadurch gekennzeichnet, dass** der Wickeltisch (36) vor oder während einer Verlagerung der Wickelvorrichtung (14) in die Transportposition (T) in eine Transportstellung verbringbar ist.

7. Rundballenpresse nach einem der vorherigen Ansprüche, **dadurch gekennzeichnet, dass** die Wickelvorrichtung (14) mittels des Aktors (38) aus der Arbeitsposition (A) in eine Ablageposition zur Ablage eines Rundballens verlagerbar ist.

8. Rundballenpresse nach einem der vorherigen Ansprüche, **dadurch gekennzeichnet, dass** zur Steuerung des Wickelarms (34), des Wickeltisches (36) und/oder einer Verlagerung der Wickelvorrichtung (14) eine Steuerungseinrichtung (44) vorgesehen.

9. Rundballenpresse nach einem der vorherigen Ansprüche, **dadurch gekennzeichnet, dass** ein Aktor (38) zur Verlagerung der Wickelvorrichtung (14) ein Hydraulikzylinder ist.

## Claims

1. Round baler for agricultural thin-stalked crops with a baling device (12) comprising a bale chamber (16), for compressing round bales, and a wrapping device (14) downstream of the baling device (12), for wrapping a round bale with a wrapping material, and a chassis (20) with at least one wheel axle (22), **characterized in that** the wrapping device (14) can be shifted by means of an actuator (38) from an operating position (A) into a transport position (T), wherein the wrapping device (14) has a support frame (28) for accommodating a wrapping arm frame (32) and a wrapping table (36), wherein the support frame (28) is pivotably mounted about a pivot axle (30) on the baling-device side.

2. Round baler according to claim 1, **characterized in that** the at least one actuator (38) is attached to the wrapping arm frame (32) on the wrapping-device side.

3. Round baler according to claim 1 or 2, **characterized in that** the wrapping arm frame (32) has a greater width than the bale chamber (16) of the baling device (12).

4. Round baler according to one of the previous claims, **characterized in that** the support frame (28) of the wrapping device (14) is formed in two parts and has a hinge axle.

5. Round baler according to one of the previous claims, **characterized in that** the wrapping arm (34) can be shifted into a defined transport setting before a displacement of the wrapping device (14) into the transport position (T).

6. Round baler according to one of the previous claims, **characterized in that** the wrapping table (36) can be shifted into a transport setting before or during a displacement of the wrapping device (14) into the transport position (T).

7. Round baler according to one of the previous claims, **characterized in that** the wrapping device (14) can be displaced by means of the actuator (38) out of the operating position (A) into a discharge position for discharging a round bale.

8. Round baler according to one of the previous claims, **characterized in that** a control device (44) is provided for controlling the wrapping arm (34), the wrapping table (36) and/or a displacement of the wrapping device (14).

9. Round baler according to one of the previous claims, **characterized in that** an actuator (38) for displacing the wrapping device (14) is a hydraulic cylinder.

## Revendications

1. Presse à balles rondes pour des produits agricoles à tiges, comprenant un dispositif de pressage (12) comportant un canal de pressage (16) pour presser des balles rondes, et comprenant un dispositif d'enrubannage (14) disposé en aval du dispositif de pressage (12) pour enrubanner une balle ronde avec un matériau d'enrubannage, et comprenant un châssis (20) avec au moins un essieu de roue (22), **caractérisée en ce qu'**au moyen d'un actionneur (38), le dispositif d'enrubannage (14) peut être amené d'une position de travail (A) à une position de transport (T), le dispositif d'enrubannage (14) comportant un bâti porteur (28) pour recevoir un bâti de bras d'enrubannage (32) et une table d'enrubannage (36), le bâti porteur (28) étant monté pivotant autour d'un axe de pivotement (30) côté dispositif de pressage.

2. Presse à balles rondes selon la revendication 1, **caractérisée en ce que**, côté dispositif d'enrubannage, le au moins un actionneur (38) est assujetti au bâti de bras d'enrubannage (32) .

3. Presse à balles rondes selon la revendication 1 ou 2, **caractérisée en ce que** le bâti de bras d'enrubannage (32) présente une largeur supérieure à celle du canal de pressage (16) du dispositif de pressage (12).

4. Presse à balles rondes selon une des revendications précédentes, **caractérisée en ce que** le bâti porteur (28) du dispositif d'enrubannage (14) est conçu en deux parties et comporte un axe de rabattement.

5. Presse à balles rondes selon une des revendications précédentes, **caractérisée en ce que**, avant de déplacer le dispositif d'enrubannage (14) vers la position de transport (T), le bras d'enrubannage (34) est amené dans une position de transport définie.

6. Presse à balles rondes selon une des revendications précédentes, **caractérisée en ce que** la table d'enrubannage (36) peut être amenée dans une position de transport avant ou pendant le déplacement du dispositif d'enrubannage (14) dans la position de transport (T).

7. Presse à balles rondes selon une des revendications précédentes, **caractérisée en ce qu'**au moyen de l'actionneur (38), le dispositif d'enrubannage (14) peut être déplacé de la position de travail (A) vers la position de dépose pour déposer une balle ronde.

8. Presse à balles rondes selon une des revendications précédentes, **caractérisée en ce que** pour commander le bras d'enrubannage (34), la table d'enrubannage (36) et/ou un déplacement du dispositif d'enrubannage (14), est prévu un équipement de commande (44).

9. Presse à balles rondes selon une des revendications précédentes, **caractérisée en ce qu'**un actionneur (38) pour déplacer le dispositif d'enrubannage (14) est un vérin hydraulique.
